**Europäisches Patentamt**

**European Patent Office**

**Office européen des brevets**

(19)

(11) Veröffentlichungsnummer : **0 287 850 B1**

(12)

# EUROPÄISCHE PATENTSCHRIFT

(45) Veröffentlichungstag der Patentschrift :
05.06.91 Patentblatt 91/23

(51) Int. Cl.$^5$ : **G01F 1/22**

(21) Anmeldenummer : 88104936.5

(22) Anmeldetag : 26.03.88

(54) Sensor zur Erfassung der Strömung einer Flüssigkeit in einer Rohrleitung.

(30) Priorität : 09.04.87 DE 3712023

(43) Veröffentlichungstag der Anmeldung :
26.10.88 Patentblatt 88/43

(45) Bekanntmachung des Hinweises auf die
Patenterteilung :
05.06.91 Patentblatt 91/23

(84) Benannte Vertragsstaaten :
DE ES FR GB IT NL SE

(56) Entgegenhaltungen :
EP-A- 0 026 715
DE-A- 3 344 757
DE-A- 3 428 373
GB-A- 1 460 594

(73) Patentinhaber : WALTER BECK GMBH & CO.
KG
Maybachstrasse 11
W-7022 Leinfelden-Echterdingen (DE)

(72) Erfinder : Beck, Walter
Heckenweg 5
W-7250 Leonberg (DE)
Erfinder : Burgbacher, Axel
Rübezahlweg 14
W-7000 Stuttgart 80 (DE)

(74) Vertreter : Patentanwälte Phys. Bartels
Dipl.-Ing. Fink Dr.-Ing. Held
Lange Strasse 51
W-7000 Stuttgart 1 (DE)

## Beschreibung

Die Erfindung betrifft einen Sensor zur Erfassung der Strömung einer unter statischem Druck stehenden Flüssigkeit in einer Rohrleitung, insbesondere einer Rohrleitung einer Warmwasserheizungsanlage oder einer Warmwasserversorgungsanlage, der die Merkmale des Oberbegriffs des Anspruches 1 aufweist.

Bei einem bekannten Duchflußkontrollgerät (EP-A2-0026715) mit einem Sensor dieser Art hat dessen von der strömeden Flüssigkeit beaufschlagter Körper eine mit einem kreisscheibenförmigen Blatt eines Paddels vergleichbare Form. Die Dichtung, durch die hindurch der den Stiel des Paddels bildende Schwenkarm hindurchgeführt ist, ist ein Faltenbalg. Nachteilig ist bei diesem Sensor vor allem der verhältnismäßig große Strömungswiderstand des von der strömenden Flüssigkeit beaufschlagten Körpers und der dadurch bedingte, entsprechend große Druckabfall in der Rohrleitung. Einer Verkleinerung des Strömungswiderstandes durch geringere Abmessungen des von der Flüssigkeit beaufschlagten Körpers setzen bei dem bekannten Sensor nicht nur die vom Schwenkarm für die Betätigung eines Schalters aufzubringende Kraft eine Grenze, sondern auch die für die Verformung des Faltenbalges erforderliche Kraft. Letztere fällt ins Gewicht, weil der Faltenbalg dem Flüssigkeitsdruck ausgesetzt ist und daher eine relativ große Steifigkeit aufweisen muß, was auch zu einer nennenswerten Hysterese führt, also deutlich auseinanderliegenden Schaltpunkten beim Schließen und Öffnen des vom Schwenkarm betätigten Schalters, was ein weiterer Nachteil des bekannten Sensors ist.

Es ist auch ein Wasserverbrauchsmesser bekannt (DE-A1-3 428 373), der als Strömungssensor eine Kugel aufweist. Diese Kugel ist in einer hülsenförmigen Staublende angeordnet, welche in das vom Wasser durchströmte Rohr eingesetzt ist und einen in Strömungsrichtung stufenförmig oder gleichmäßig größer werdenden Durchmesser hat. Die Kugel ist am einen Ende eines in Richtung der Längsachse der Staublende längsverschiebbaren Stabes 6 angeordnet, auf den eine der Verschiebung der Kugel zu Abschnitten mit größerem Durchmesser der Staublende entgegenwirkende Feder einwirkt.

Bei einem anderen bekannten Durchflußkontrollgerät, dessen Wirkungsweise auf der Messung der Druckdifferenz vor und nach einer in den Leitungszug eingebauten Drossel beruht, sind die Kosten so groß, daß ein Einsatz bisher aus wirtschaftlichen Gründen nur im Anlagenbau möglich war. Hinzu kommen hier als weitere Nachteile die Verschmutzungsgefahr der Drossel, der ebenfalls relativ große Strömungswiderstand, die relativ große Zahl möglicher Undichtigkeitsstellen und Systemkomponenten. Letzeres schließt in der Regel die Unterbringung aller Komponenten in einem einzigen Gehäuse aus.

Der Erfindung liegt die Aufgabe zugrunde, einen Sensor zur Erfassung der Strömung einer unter statischem Druck stehenden Flüssigkeit in einer Rohrleitung zu schaffen, bei dem im Vergleich zu den bekannten Sensoren der Strömungswiderstand und die Fertigungskosten soweit verringert sind, daß er auch für den Einbau in kleine Warmwasserheizungsanlagen oder Warmwasserversorgungsanlagen geeignet ist, um dort die Energiezufuhr und/oder die Drehzahl einer Förderpumpe bedarfsabhängig steuern zu können.

Diese Aufgabe löst ein Sensor mit den Merkmalen des Anspruches 1.

Die Kugelform oder kugelähnliche Form des von der strömenden Flüssigkeit beaufschlagten Körpers ergibt ein optimales Verhältnis zwischen der erforderlichen Betätigungskraft des Schwenkarms und dem durch den Körper bedingten Strömungswiderstand oder Druckabfall. Hierzu trägt auch die Querschnittserweiterung des Strömungskanals in Strömungsrichtung bei, da sie dazu führt, daß mit einer zunehmenden Auslenkung des Körpers aus seiner Ausgangsstellung heraus die freie Querschnittsfläche vergrößert wird, was den Druckabfall reduziert und die auf den Schwenkarm ausgeübte Kraft bei zunehmender Auslenkung abnehmen läßt, wodurch sich stabile Positionen des Körpers bei minimaler Rückstellkraft erreichen lassen. Vorteilhaft ist ferner, daß bei einer Kugelform oder einer kugelähnlichen Form des Körpers dessen Strömungswiderstand in unterschiedlichen Schwenkstellungen nicht unterschiedlich ist oder die Unterschiede vernachlässigbar klein sind. Weiterhin läßt sich eine Kugel viel kostengünstiger als ein paddelförmiger Körper mit der erforderlichen Genauigkeit im Strömungskanal so positionieren, daß im mit Flüssigkeit beaufschlagten Teil eine Justage überflüssig ist. Schließlich ist ein kugelförmiger oder kugelähnlicher Körper störunanfälliger, was den konstruktiven Aufwand und damit die Kosten ebenfalls reduziert. Das halbkugelförmige Innenprofil des sich in Strömungsrichtung erweiternden Abschnitts des Strömungskanals ist sowohl strömungsgünstig als auch platzsparend. Eine platzsparende Bauweise des Sensors ist ebenfalls ein wesentliches Kriterium für viele Einsatzmöglichkeiten. Zu einer Minimierung des Druckabfalls leistet die erfindungs gemäße Gestaltung der Strömungskanalabschnitte einen wesentlichen Beitrag, da sie einen optimalen Strömungsverlauf ergibt.

Bei einer bevorzugten Ausführungsform ist als Dichtung, durch die hindurch der Schwenkarm geführt ist, eine Rollmembran vorgesehen. Mit einer solchen Dichtung läßt sich nämlich sowohl die für ihre Verformung bei einer Schwenkbewegung des Schwenkarmes aufzubringende Kraft als auch die Hysterese erheblich reduzieren. Dies gilt insbesondere bei einer Ausbildung gemäß den Ansprüchen 4 und 5, die eine minimale Dicke der der Verformung unterworfenen Mittelzone sowie eine minimale Walkarbeit erreichen läßt. Bedingt ist dies dadurch, daß der statische Druck der Flüssigkeit auf die beiden Randzonen der Rollmembran im Sinne einer Erhöhung der Abdichtwirkung einwirkt und die Mittelzone der Rollmembran sich in einer optimalen Lage bezüglich der Drehachse des Schwenkarmes befindet. Die optimale Lage der Schwenkachse bezüglich der Walkzone der Rollmembrane läßt sich in konstruktiv einfacher Weise mit den Merkmalen des Anspruches 6 realisieren. Hinsichtlich der Fertigungskosten besonders vorteilhaft ist eine Gestaltung der mit der Rollmembrane in Berührung kommenden Teile gemäß den Ansprüchen 9 und 10.

Sofern nicht der Schwenkarm selbst oder eine ihn tragende Brücke geeignet sind, den die Schwenkbewegung des Schwenkarmes in ein entsprechendes Signal umsetzenden Wandler zu beeinflussen, kann ein starr mit dem Schwenkarm verbundener Hebel für diesen Zweck vorgesehen sein. An diesem Hebel kann eine die Rückstellkraft erzeugende Feder argreifen, sofern es nicht konstruktiv einfacher ist, sie am Schwenkarm angreifen zu lassen. Unabhängig von der Angriffstelle der Rückstellkraft ist es dabei zweckmäßig, eine Einrichtung zur Justierung von deren Vorspannung vorzusehen. Dies gilt vor allem dann, wenn unterschiedliche Wandler wahlweise vorgesehen werden können, also beispielsweise statt eines Schalters ein digital oder analog arbeitender Weggeber.

Um mit möglichst geringem Kostenaufwand den kugelförmigen oder kugelähnlichen Körper genau in der optimalen Position bezüglich der Wandung des Strömungskanals mit dem Schwenkarm verbinden zu können, sind letzterer und der Körper vorzugsweise gemäß Anspruch 12 ausgebildet. Der Körper kann hierbei im Inneren des Strömungskanals dadurch mit dem Schenkarm verbunden werden, daß in die zweite Bohrung ein Gießharz oder ein anderes Klebemittel eingebracht wird, das den Körper mit dem Schwenkarm sicher verbindet.

Im folgenden ist die Erfindung anhand eines in der Zeichnung dargestellten Ausführungsbeispiels im einzelnen erläutert.

Es zeigen

Fig. 1 einen schematisch dargestellen Längsschnitt des Ausführungsbeispiels,

Fig. 2 einen Schnitt durch den von der strömenden Flüssigkeit beaufschlagten Kugelkörper und den mit ihm verbundenen Endabschnitt des schwenkarms,

Fig. 3 einen Längsschnitt durch die den unter dem Druck der Flüssigkeit stehenden Raum im Bereich der Durchführung des Schwenkarms begrenzenden Teile,

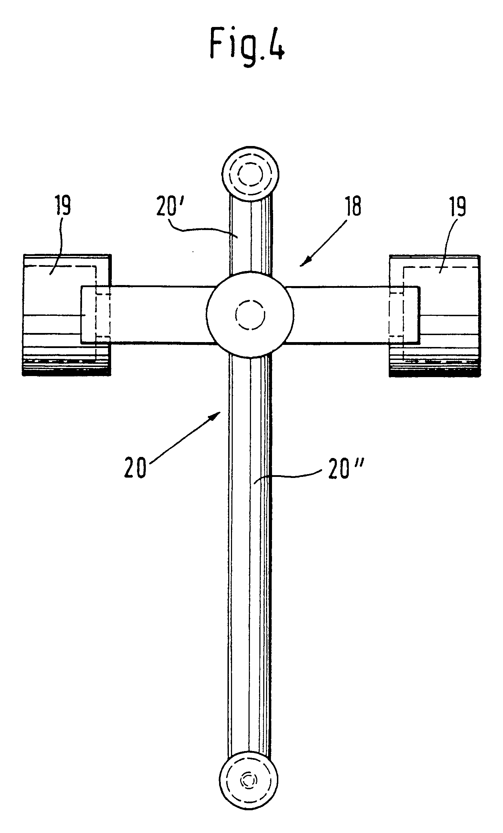

Fig. 4 eine Draufsicht auf den den Schwenkarm tragenden Teil der Führungs- und Bewegungsübertragungsmechanik,

Fig. 5 eine Frontansicht dieses Teils der Führungs- und Bewegungsübertragungsmechanik.

Ein Sensor für den Einbau zwischen zwei Abschnitten einer Rohrleitung oder zwischen eine Rohrleitung und eine Armatur, ein Gerät oder dergleichen einer Warmwasserheizungsanlage oder einer Warmwasserversorgungsanlage zum Zwecke einer von der Strömungsgeschwindigkeit des die Rohrleitung durchströmenden Wassers abhängigen Signalgabe weist ein Sensorgehäuse 1 auf, das mit einem Einlaß- Anschlußstutzen 2 und einem Auslaß- Anschlußstutzen 3 versehen ist, über welche die Verbindung zu denjenigen Teilen der Anlage hergestellt wird, zwischen die der Sensor einzufügen ist. Damit der Druckabfall der Flüssigkeit während des Durchlaufs das Sensorgehäuse 1 möglichst klein ist, sind die beiden Anschlußstutzen 2 und 3, die je mit einem Außengewinde versehen sind, im Ausführungsbeispiels gleichachsig angeordnet. Sie haben ferner die gleiche lichte Weite.

An den Einlaß- Anschlußstutzen 2 schließt sich gleichachsig ein erster Abschnitt 4 eines Strömungskanals für den Durchlaß des Wassers an, dessen Innenprofil die Form einer sich gegen den Auslaß- Anschlußstutzen 3 öffnenden Halbkugel hat. Dort, wo die zylindrische Innenwand des Einlaß- Anschlußstutzens 2 in die halbkugelförmig gekrümmte Innenwand des ersten Abschnittes 4 des Strömungskanals übergeht, ist eine konzentrisch zum Strömungskanal liegende Ringkante 5 vorhanden.

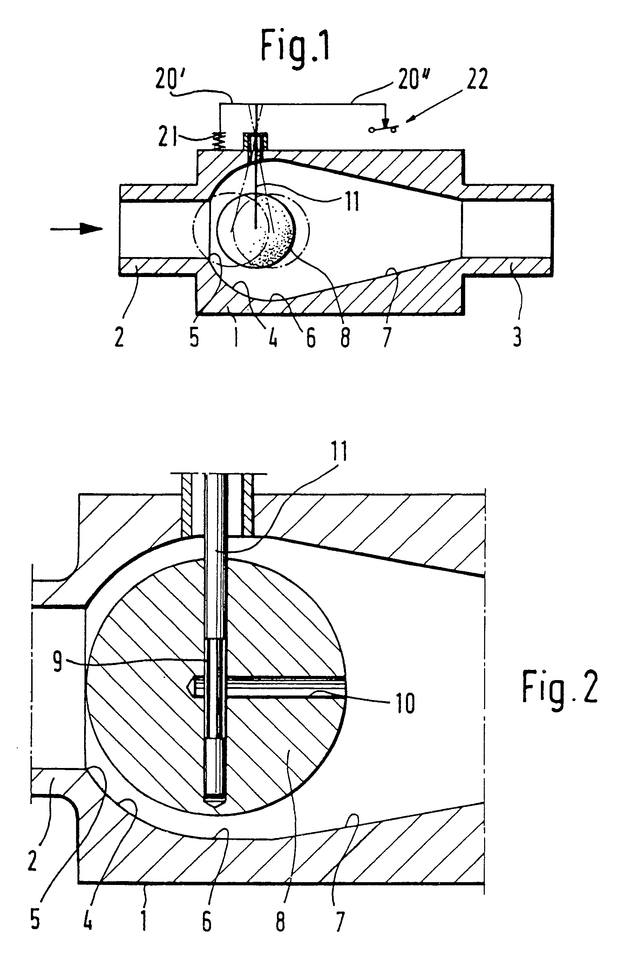

Aus Toleranzgründen schließt sich an das den maximalen Durchmesser aufweisende Ende des ersten Abschnittes 4 des Strömungskanals ein im Durchmesser gleich großer zylindrischer Abschnitt 6 an, dessen axiale Länge wesentlich kleiner ist als sein Durchmesser. Es folgt dann, wie Fig. 1 zeigt, ein sich gegen den Auslaß- Anschlußstuzten 3 konisch auf dessen Innendurchmesser verjüngender dritter Abschnitt 7 des Strömungskanals.

Im Strömungskanal ist ein Kugelkörper 8 angeordnet, der im Gegensatz zu den beiden Anschlußstutzen 2 und 3 und dem den Strömungskanal begrenzenden Teil des Sensorgehäuses 1 nicht aus Metall besteht, sondern im Hinblick auf möglichst geringe Fertigungskosten und einer der Dichte des Mediums angepaßten Dichte aus Kunststoff. Der Durchmesser des Kugelkörpers 8 ist etwa 1,5 mal so groß wie der Innendurchmesser des Einlaß- Anschlußstutzens 2. Der maximale Durchmesser des ersten Abschnittes 4 und damit auch der Durchmesser des zylindischen Abschnittes 6 des Strömungskanals ist so gewählt, daß die hier vorhandene Querschnittsfläche größer oder gleich der Summe aus der freien Querschnittsfläche des Einlaß- Anschlußstutzens 2 und der Querschnittsfläche des Kugelkörpers 8 ist.

Befindet sich das Zentrum des Kugelkörpers 8 in der vom Ende des ersten Abschnittes 4 definierten Ebene, dann steht hier also eine freie Fläche für den Durchfluß des Wassers zur Verfügung, die größer oder gleich dem freien Querschnitt des Einlaß-Anschlußstutzens 2 ist.

Der Kugelkörper 8 ist, wie Fig. 2 zeigt, mit zwei im rechten Winkel zueinander verlaufenden Sacklochbohrungen 9 und 10 versehen, deren Längsachsen beide durch den Mittelpunkt des Kugelkörpers 8 gehen. Die Sacklochbohrung 9 endet in geringem Abstand von der Kugeloberfläche, während die Sacklochbohrung 10 kurz hinter der Kreuzungsstelle mit der Sacklochbohrung 9 endet. Die Sacklochbohrung 9 dient der Aufnahme des einen Endabschnittes eines Schwenkarms 11, der durch einen geradlinigen, zylindrischen Stab gebildet ist. Dieser Stab hat in dem die Sacklochbohrung 10 kreuzenden Abschnitt einen verkleinerten Durchmesser. Er liegt deshalb hier nicht wie in den beiden angrenzenden Abschnitten an der Sacklochbohrung 9 an.

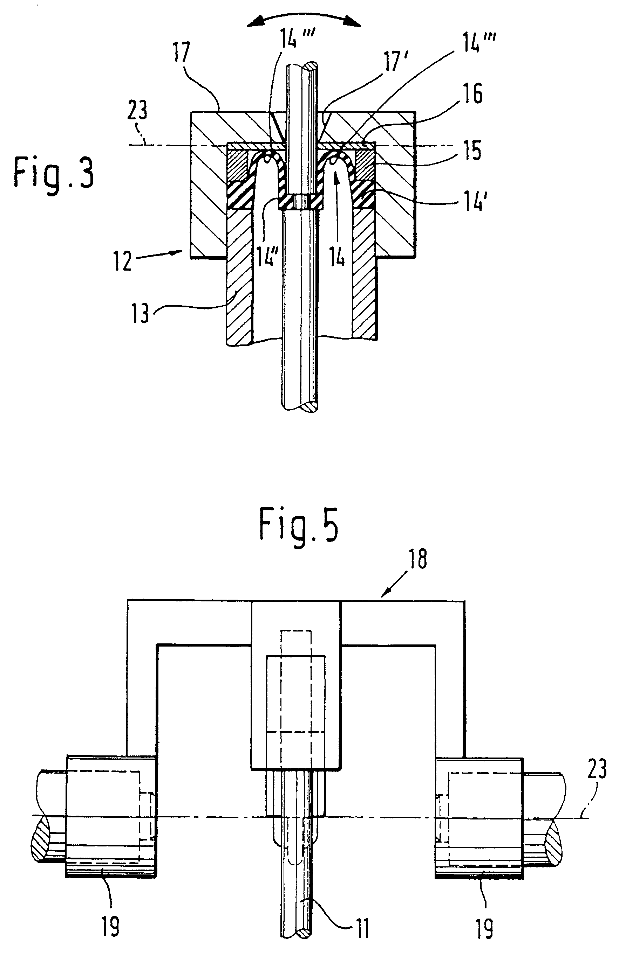

In der durch die stelle größten Durchmessers definierten Ebene des halbkugelförmigen Abschnittes 4, ·auf der die Längsachse des Strömungskanals lotrecht steht, liegt die Längsachse eines zylindrischen Durchführungsdomes 12 für den Schwenkarm 11. Der Innendurchmesser des Durchführungsdomes 12 ist etwa 2,5 mal so groß wie der Durchmesser des Schwenkarmes 11. Wie Fig. 3 zeigt, liegt an der oberen Stirnfläche eines hülsenförmigen Teils 13 des Durchführungsdomes 12 die im Querschnitt rechteckförmige, verstärkte äußere Ringzone 14′ einer Rollmembran 14 an. Ein Druckring 15 drückt die äußere Ringzone 14′ gegen die Stirnfläche des hülsenförmigen Teils 13. An der der äußeren Ringzone 14′ abgewandten Seite des Druckringes 15 liegt eine Lochscheibe 16 an. Letztere sowie der Druckring 15 und die äußere Ringzone 14′ werden von einer Überwurfmutter 17 gegen die Stirnfläche des hülsenförmigen Teils 13 gedrückt, der ein Außengewinde für den Eingriff der Überwurfmutter 17 hat. Der Schwenkarm 11, der durch die Lochscheibe 16 und eine mit deren Loch fluchtende, sich nach obenhin kegelförmig erweiternde Bohrung 17′ im ebenen Boden der Überwurfmutter 17 hindurch erstreckt, ist, wie Fig. 3 zeigt, in Höhe der äußeren Ringzone 14′ der Rollmembran 14 mit einer Ringnut versehen, in die eine entsprechend dem Querschnitt dieser Ringnut verstärkte innere Ringzone 14″ der Rollmembran 14 mit Vorspannung eingreift. Die zwischen der äußeren Ringzone 14′ und der inneren Ringzone 14″ liegende Mittelzone 14‴ der Rollmembran 14 bildet eine zum Kugelkörper 8 hin offene, den Schwenkarm 11 umgebende Rinne oder Nut, was zur Folge hat, daß der Druck, unter dem das auch in den Durchführungsdom 12 eindringende Wasser steht, die innere Ringzone 14″ und die sich an diese sowie an die äußere Ringzone 14′ anschließenden Bereiche der Mittelzone 14‴ an den Schwenkarm bzw. den Druckring andrückt, wodurch die Abdichtwirkung der Rollmembrane mit steigendem Wasserdruck vergrößert wird. Der toroidförmig gekrümmte Teil der Mittelzone 14‴ stützt sich nach oben hin an der Lochscheibe 16 an, deren Durchmesser so gewählt ist, daß der Ringspalt zwischen dem Lochrand und dem Schwenkarm kleiner ist als die Dicke der Mittelzone 14‴. Die Mittelzone 14‴ kann deshalb nicht in diesen Ringspalt hineingedrückt werden. Hierdurch sowie durch die gewählte Form der Rollmembrane 14 und die geringe Dicke der hochflexiblen Mittelzone 14‴ der Rollmembran 14 ist sichergestellt, daß sowohl die Kraft, welche vom Schwenkarm 11 bei einer Schwenkbewegung ausgebracht werden muß, um die Rollmembrane 14 entsprechend zu deformieren, als auch die durch die Rollmembran 14 bedingte Hysterese vernachlässigbar klein sind. Dank der Lochscheibe 16 kann der Ringspalt an der engsten Stelle der Bohrung 17′ wesentlich größer sein als derjenige der Lochscheibe 16, was zu geringeren Fertigungskosten führt.

Wie Fig. 5 zeigt, ist das obere Ende des Schwenkarmes 11 mit einer symmetrisch zu ihm ausgebildeten Brücke 18 fest verbunden, deren Jochteil rechtwinklig zum Schwenkarm 11 verläuft. Die beiden sich vom Jochteil parallel zum Schwenkarm 11 gegen den Kugelkörper 8 hin erstreckenden Schenkel sind fest mit je einer der beiden miteinander fluchtenden Lagerbuchsen 19 verbunden, deren die ideelle Schwenkachse 23 bildende Längsachse in der durch die Lochscheibe 16 definierten Ebene liegt und die Längsachse des Schwenkarmes 11 schneidet. Hierdurch wird erreicht, daß im wesentlichen nur der an der Lochscheibe 16 anliegende Teil der Mittelzone 14‴ der Rollmembran 14 bei einer Schwenkbewegung des Schwenkarmes 11 einer Deformation unterworfen wird. Die beiden Lagerbuchsen 14 sind auf nicht dargestellten Lagerzapfen gelagert, welche die Brücke 18 dank der Stirnwand der Lagerbuchsen 19 auf den einander zugekehrten Seiten gegen eine axiale Verschiebung sichern. Die Lagerzapfen sind in nicht dargestellter Weise im Sensorgehäuse 1 einstellbar festgelegt.

Den Jochteil der Brücke 18 sowie den Schwenkarm 11 kreuzt je rechtwinklig ein durch eine hochkant stehende Schiene gebildeter Hebel 20. An seinem sich entgegen der Durchflußrichtung des Wassers durch den Strömungskanal erstreckenden kurzen Hebelarm 20′ greift von unten her eine Schraubendruckfeder 21 an, die sich andererseits an einer ihrer Längsrichtung erstreckenden Schraube abstützt, mit Hilfe deren die Vorspannung der Schraubendruckfeder 21 einstellbar ist. Die Schraubendruckfeder 21 übt auf den Schwenkarm 11 ein Drehmoment aus, das den Kugelkörper 8 in Anlage an der Ringkante 5 zu halten sucht, jedoch sehr gering ist, da es nur in der Lage zu sein braucht, den Kugelkörper 8 in Anlage an die Ringkante 5 bringen zu können, wenn das Wasser nicht strömt. Der sich in Strömungsrichtung erstreckende lange Arm 20″ des Hebels 20 betätigt im Ausführungsbeispiel unmittelbar einen Mikroschalter 22. Dieser ist bezüglich des langen Armes 20″ des Hebels 20 so angeordnet, daß er umgeschaltet wird, wenn der Schwenkarm 11 vom Kugelkörper 8 in die in Fig. 1 dargestellte Mittellage geschwenkt wird, in der seine Längsachse lotrecht auf der Längsachse des Strömungskanals steht, oder wenn der Kugelkörper 8 von dem ihn anströmenden Wasser noch weiter von der Ringkante 5 abgehoben wird. Da die Hysterese sehr gering ist, wird der Mikroschalter 22 im anderen Sinne umgeschaltet, wenn sich der Schwenkarm 11 aus der in Fig. 1 dargestellten Mittellage heraus gegen diejenige Endlage hin bewegt, welche durch die Anlage des Kugelkörpers 8 an der Ringkante 5 definiert ist.

Die Montage erfolgt in der Weise, daß der Kugelkörper 8 mit Hilfe einer in seine Sacklochbohrung 10 eingreifenden Montagestange in Anlage an die Ringkante 5 gebracht wird. Sodann wird der Schwenkarm 11 in die Sacklochbohrung 9 des Kugelkörpers 8 eingeführt und die Brücke 18 auf den Schwenkzapfen gelagert. Durch den als Rohr ausgebildeten Montagestab hindurch oder mit Hilfe einer anderen Einspritzdüse wird nun ein Klebemittel, beispielsweise ein Gießharz, durch die Bohrung 10 in den freien Raum zwischen der Wandung der Sacklochbohrung 9 und dem im Durchmesser reduzierten Teil des Schwenkarmes 11 eingespritzt. Der Kugelkörper 8 wird dadurch exakt in der gewünschten Lage mit dem Schwenkarm 11 fest verbunden.

Durch die Umschaltung des Mikroschalters 22 kann die Drehzahl einer Förder- oder Umwälzpumpe und/oder die Heizleistung eines Heizkessels oder Boilers verändert werden. Hierdurch wird sowohl die Pumpenleistung als auch die Heizleistung an den Bedarf angepaßt, was den Wirkungsgrad der Anlage verbessert und bei thermostatgesteuerten Heizkörpern störende Geräusche verhindert oder zumindest reduziert. Ferner wird durch eine bedarfsangepaßte Förderleistung bei Warmwasserversorgungsanlagen mit Kupferrohren der Verschleiß verringert. Ob der Mikroschalter 22 als Schließer oder Öffner zu verwenden ist, hängt beim Einbau des Sensors in eine Warmwasserheizungsanlage davon ab, ob er in der gemeinsamen Vor-oder Rücklaufleitung angeordnet ist oder in einer Bypassleitung.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Ansprüche**

1. Sensor zur Erfassung der Strömung einer unter statischem Druck stehenden Flüssigkeit in einer Rohrleitung, insbesondere einer Rohrleitung einer Warmwasserheizungsanlage oder einer Warmwasserversorgungsanlage, mit einem von der strömenden Flüssigkeit beaufschlagten Körper (8), der in Richtung der Strömung entgegen einer Rückstellkraft aus seiner Nullstellung heraus entsprechend der Strömungsgeschwindigkeit bewegbar von einer Führungs- und Bewegungsübertragungsmechanik (11, 18, 19) geführt ist, die einen sich quer zur Strömungseinrichtung erstreckenden Schwenkarm (11), aufweist, mit dessen einem Ender der Körper (8) fest verbunden ist und der durch eine Dichtung (14) hindurch aus einem Teil eines Sensorgehäuses (1) heraus, welcher einen den Körper (8) enthaltenden Strömungskanal (4, 6, 7) für den Durchfluß der Flüssigkeit bildet, zu seiner Schwenkachse (23) geführt ist, die quer zu seiner Längsachse und quer zur Strömungsrichtung liegt, und mit einem die Schwenkbewegung des Schwenkarms (11) in ein entsprechendes Signal umsetzenden Wandler (22), dadurch gekennzeichnet, daß

a) der Körper (8) eine einer Kugel zumindest ähnliche Form aufweist und der vom Sensorgehäuse (1) gebildete Strömungskanal (4, 6, 7) in einem Abschnitt (4), der sich in Strömungsrichtung an eine die Ausgangsstellung des Körpers (8) definierende Zone (5), die die Grenze zwischen einem Einlaß-Anschlußstutzen (2) und dem Abschnitt (4) bildet, anschließt, einen in Richtung der Strömung zunehmenden freien Querschnitt hat,

b) der Abschnitt (4) des Strömungskanals (4, 6, 7) mit dem in Richtung der Strömung zunehmenden freien Querschnitt ein halbkugelförmiges Innenprofil hat und

c) and der Stelle größter lichter Weite des sich in Richtung der an der Stelle größter lichter Weite des sich in Richtung der Strömung erweiternden Abschnitts (4) des Strömungskanals (4, 6, 7) seine Querschnittsfläche größer oder gleich der Summe aus der quer zur Richtung der Strömung liegenden Querschnittsfläche des Körpers (8) und der freien Querschnittsfläche (2) ist, an den der Abschnitt (4) mit sich erweiternder Querschnittsfläche unmittelbar anschließt.

2. Sensor nach Anspruch 1, dadurch gekennzeichnet, daß sich an den Abschnitt (4) des Strömungskanals mit sich erweiternder Querschnittsfläche ein zylindrischer Abschnitt (6) anschließt, auf den ein Abschnitt (7) mit in Strömungsrichtung abnehmender Querschnittsfläche folgt.

3. Sensor nach Anspruch 1, dadurch gekennzeichnet, daß als Dichtung eine Rollmembran (14) vorgesehen ist.

4. Sensor nach Anspruch 3, dadurch gekennzeichnet, daß der innere und der äußere Rand der Rollmembran (14) durch je eine verstärkte Ringzone (14', 14'') gebildet ist, die gegen den Körper (8) hin versetzt im Abstand von der Schwenkachse (23) des Schwenkarms (11) an diesem bzw. einem ihn im Abstand umgebenden hülsenförmigen Teil (13) anliegen, und die Mittelzone (14''') der Rollmembran (14) eine zum Körper (8) hin offene, den Schwenkarm (11) umschließende Rinne bildet.

5. Sensor nach Anspruch 4, dadurch gekennzeichnet, daß die innere Ringzone (14'') der Rollmembran (14) in eine Ringnut des Schwenkarms eingreift und die äußere Ringzone (14') zwischen der Stirnfläche des hülsenförmigen Teils (13) und einem Druckring (15) eingespannt ist.

6. Sensor nach einem der Ansprüche 3 bis 5 dadurch gekennzeichnet, daß für die Schwenkachse (23) zwei durch eine Brücke (18) verbundene Schwenklager (19) vorgesehen sind und daß die dünne Platte (16) zwischen diesen beiden Schwenklagern (19) zumindest nahezu in der Schwenkachse (23) liegt.

7. Sensor nach Anspruch 6, dadurch gekennzeichnet, daß zumindest nahezu in der durch die beiden Schwenklager definierten ideellen Schwenkachse (23) eine dünne Platte (16) relativ zum Sensorgehäuse (1) ortsfest angeordnet ist, an der die Mittelzone (14'') der Rollmembran (14) anliegt, und daß die Platte (16) mit einer Durchtrittsöffnung für den Schwenkarm (11) versehen ist, die einen Spalt zwischen dem Lochrand und dem Schwenkarm (11) ergibt, der kleiner ist als die Dicke der Rollmembran (14) in der Walkzone.

8. Sensor nach Anspruch 7, dadurch gekennzeichnet, daß die Platte (16) eine Lochscheibe ist, die am Boden eines topfförmigen Bauteils (17) anliegt, welches das die äußere Ringzone (14') der Rollmembran (14) tragende Ende des hülsenförmigen Teils (13) übergreift und die Lochscheibe gegen den Druckring sowie diesen gegen die äußere Ringzone (14') der Rollmembran (14) drückt.

9. Sensor nach einem der Ansprüche 1 bis 8, dadurch gekennzeichnet, daß mit dem Schwenkarm (11) ein in dessen Schwenkebene oder parallel zu dieser liegender Hebel (20) starr verbunden ist, der den Wandler ansteuert und an dem eine die Rückstellkraft erzeugende Feder (21) angreift.

10. Sensor nach Anspruch 9, gekennzeichnet durch eine Einrichtung zum Justieren der Vorspannung der Feder (21).

11. Sensor nach Anspruch 9 oder 10, dadurch gekennzeichnet, daß der Wandler ein vom Hebel (20) betätigbarer Schalter (22) ist.

12. Sensor nach einem der Ansprüche 1 bis 11, dadurch gekennzeichnet, daß der Schwenkarm (11) ein zylindrischer Stab ist, der in dem in eine Bohrung (9) des Körpers (8) eingreifenden Abschnitt mit einer Ringnut versehen ist, und daß der Körper (8) eine zweite Bohrung (10) aufweist, welche in die erste Bohrung (9) in einem Abschnitt mündet, in dem die Ringnut des zylindrischen Stabes liegt.

## Claims

1. Sensor for detecting the flow of a fluid which is under static pressure in a pipe, in particular a pipe of a warm water heating system or a warm water supply system, with a body (8) which is acted upon by the fluid current and is guided in the direction of the flow against a restoring force from its zero position in accordance with the flow velocity in a movable manner by a guiding and movement transmission mechanism (11, 18, 19) which comprises a pivot arm (11) which extends transversely to the flow device, to one end of which the body (8) is rigidly connected, and which is guided to its pivot axis (23) through a seal (14) out of one part of a sensor housing (1), which part forms a flow duct (4, 6, 7), containing the body (8), for the passage of the fluid, which pivot axis lies transversely to the longitudinal axis thereof and transversely to the flow direction, and with a converter (22) which converts the pivot movement of the pivot arm (11) into a corresponding signal, characterized in that

    a) the body (8) has a shape which is at least similar to a sphere and the flow duct (4, 6, 7), which is formed by the sensor housing (1) in a section (4) which in the flow direction lies adjacent a zone (5), which defines the initial position of the body (8) and which forms the boundary between an inlet connection piece (2) and the section (4), has a free cross-section widening in the flow direction;

    b) the section (4) of the flow duct (4, 6, 7) has a hemispherical inner profile with the free cross-section widening in the flow direction; and

    c) the section (4) of the flow duct (4, 6, 7) which widens in the flow direction has at its highest inside width a cross-sectional surface area which is greater than or equal to the sum of the cross-sectional surface area of the body (8) lying transverse to the flow and the free cross-sectional surface area of the inlet connection piece (2), to which the widening cross-sectional surface area of the section (4) is immediately adjacent.

2. Sensor according to claim 1, characterized in that a cylindrical section (6), which is followed by a section (7) with a cross-sectional surface area which decreases in the flow direction, lies adjacent the section (4) of the flow duct with a widening cross-sectional surface area.

3. Sensor according to claim 1, characterized in that a rolling membrane (14) is provided as a seal.

4. Sensor according to claim 3, characterized in that the inner and outer edges of the rolling membrane (14) are formed by a strenghtened annular zone (14', 14'') in each case which lie adjacent the pivot arm or a sleeve-like part (13), which surrounds the latter at a distance, in such a way that the annular zones are offset towards the body (8) at a distance from the pivot axis (23) of the pivot arm (11), and the middle zone (14‴) of the rolling membrane (14) forms a channel which surrounds the pivot arm (11) and is open towards the body (8).

5. Sensor according to claim 4, characterized in that the inner annular zone (14″) of the rolling membrane (14) engages in an annular groove of the pivot arm and the outer annular zone (14′) is fixed between the end face of the sleeve-like part (13) and a thrust ring (15).

6. Sensor according to claims 3 to 5, characterized in that two pivot bearings (19) linked together by a bridge (18) are provided for the pivot axis (23) ; and in that the thin sheet (16) between said two pivot bearings (19) lies at least approximately in the pivot axis (23).

7. Sensor according to claim 6, characterized in that a thin sheet (16) is disposed in a stationary manner relative to the sensor housing (1) at least approximately in the ideal pivot axis (23) defined by the two pivot bearings, and abuts the middle zone (14‴) of the rolling membrane (14), and in that the sheet (16) is provided with a passage opening for the pivot arm (11), which results in a gap between the hole edge and the pivot arm (11) which is smaller than the thickness of the rolling membrane (14) in the pressing zone.

8. Sensor according to claim 7, characterized in that the sheet (16) is a perforated disc which is adjacent the base of a pot-shaped structural part (17) which overlaps the end of the sleeve-like part (13) bearing the outer annular zone (14′) of the rolling membrane (14) and presses the perforated disc against the thrust ring as well as the latter against the outer annular zone (14′) of the rolling membrane (14).

9. Sensor according to one of claims 1 to 8, characterized in that the pivot arm (11) is rigidly connected to a lever (20) which lies in the pivot plane thereof or parallel thereto, controls the converter and with which a spring (21) providing the restoring force engages.

10. Sensor according to claim 9, characterized by a device for adjusting the pretension of the spring (21).

11. Sensor according to claim 9 or 10, characterized in that the converter is a switch (22) which can be activated by the lever (20).

12. Sensor according to any one of claims 1 to 11, characterized in that the pivot arm (11) is a cylindrical bar which is provided with an annular groove in the section engaging in a bore (9) of the body (8) ; and in that the body (8) comprises a second bore (10) which leads into the first bore (9) in a section where the annular groove of the cylindrical bar is located.

## Revendications

1. Capteur pour mesurer l'écoulement d'un liquide sous pression statique dans une conduite, notamment une conduite d'une installation de chauffage à eau chaude ou d'eau chaude sanitaire, avec un corps (8), sollicité par le liquide qui s'écoule, qui est guidé en déplacement, en direction de l'écoulement et à l'encontre d'une force de rappel, à partir d'une position neutre et en correspondance avec la vitesse d'écoulement, par un mécanisme de guidage et de transmission de mouvement (11, 18, 19) qui comporte un bras pivotant (11), s'étendant perpendiculairement à la direction d'écoulement, à une extrémité duquel est assemblé rigidement le corps (8) et qui, en traversant un joint d'étanchéité (14), sort d'une partie d'un boîtier de capteur (1), qui forme un canal d'écoulement (4, 6, 7) destiné au passage du liquide et contenant le corps (8), pour atteindre son axe de pivotement (23) qui est perpendiculaire à son axe longitudinal et perpendiculaire à la direction d'écoulement, et avec un convertisseur (22) transformant le mouvement de pivotement du bras pivotant (11) en un signal correspondant, caractérisé en ce que

a) le corps (8) présente une forme au moins semblable à une sphère et le canal d'écoulement (4, 6, 7) formé par le boîtier de capteur (1) possède, dans une partie (4) qui se raccorde dans la direction d'écoulement à une zone (5) qui définit la position de repos du corps (8) et qui constitue la limite entre un raccord d'entrée (2) et la partie (4), une section libre augmentant en direction de l'écoulement,

b) la partie (4) du canal d'écoulement (4, 6, 7), dont la section libre augmente en direction de l'écoulement, possède un profil intérieur hémisphérique et

c) à l'endroit de plus grand diamètre intérieur de la partie (4) du canal d'écoulement (4, 6, 7) qui s'élargit en direction de l'écoulement, son aire de section est supérieure ou égale à la somme de l'aire de section du corps (8) perpendiculairement à la direction de l'écoulement et de l'aire de section libre du raccord d'entrée (2) auquel se raccorde directement la partie (4) dont l'aire de section s'élargit.

2. Capteur selon la revendication 1, caractérisé en ce qu'à la partie (4) du canal d'écoulement dont l'aire de section s'élargit se raccorde une partie cylindrique (6) qui est suivie d'une partie (7) dont l'aire de section diminue dans la direction d'écoulement.

3. Capteur selon la revendication 1, caractérisé en ce qu'une membrane roulante (14) est prévue comme joint d'étanchéité.

4. Capteur selon la revendication 3, caractérisé en ce que le bord intérieur et le bord extérieur de la membrane roulante (14) sont constitués par des zones annulaires renforcées respectives (14′, 14″)

qui s'appliquent respectivement, en étant décalées vers le corps (8), contre le bras pivotant (11) à distance de son axe de pivotement (23) et contre une partie en forme de manchon (13) qui entoure à distance le bras (11), et la zone centrale (14″) de la membrane roulante (14) forme une rigole ouverte vers le corps (8) et entourant le bras pivotant (11).

5. Capteur selon la revendication 4, caractérisé en ce que la zone annulaire intérieure (14″) de la membrane roulante (14) s'engage dans une rainure annulaire du bras pivotant et la zone annulaire extérieure (14′) est serrée entre la face frontale de la partie en forme de manchon (13) et une bague de serrage (15).

6. Capteur selon l'une des revendications 3 à 5, caractérisé en ce que deux paliers de pivotement (19) reliés par un pont (18) sont prévus pour l'axe de pivotement (23) et en ce que la mince plaque (16) entre ces deux paliers de pivotement (19) se situe au moins approximativement dans l'axe de pivotement (23).

7. Capteur selon la revendication 6, caractérisé en ce qu'une mince plaque (16) est disposée, stationnairement par rapport au boîtier de capteur (1), au moins approximativement dans l'axe de pivotement idéal (23) défini par les deux paliers de pivotement, plaque contre laquelle s'applique la zone centrale (14″) de la membrane roulante (14), et en ce que la plaque (16) est munie d'une ouverture de passage pour le bras pivotant (11), qui produit entre le bord du trou et le bras pivotant (11) une fente qui est inférieure à l'épaisseur de la membrane roulante (14) dans la zone de foulage.

8. Capteur selon la revendication 7, caractérisé en ce que la plaque (16) est un disque perforé qui s'applique sur le fond d'un élément constructif (17) en forme de pot, qui recouvre l'extrémité de la partie en forme de manchon (13) qui porte la zone annulaire extérieure (14′) de la membrane roulante (14), et qui pousse le disque perforé contre la bague de serrage et cette dernière contr la zone annulaire extérieure (14′) de la membrane roulante (14).

9. Capteur selon l'une des revendications 1 à 8, caractérisé en ce qu'un levier (20) est assemblé rigidement au bras pivotant (11), levier qui est situé dans le plan de pivotement du bras ou parallèlement à ce plan, et qui commande le convertisseur et sur lequel agit un ressort (21) produisant la force de rappel.

10. Capteur selon la revendication 9, caractérisé par un dispositif pour ajuster la précontrainte du ressort (21).

11. Capteur selon la revendication 9 ou 10, caractérisé en ce que le convertisseur est un commutateur (22) que le levier (201 peut actionner.

12. Capteur selon l'une des revendications 1 à 11, caractérisé en ce que le bras pivotant (11) est une tige cylindrique qui est munie d'une rainure annulaire dans une partie s'engageant dans un perçage (9) du corps (8), et en ce que le corps (8) présente un deuxième perçage (10) qui débouche dans le premier perçage (9) dans une partie dans laquelle se trouve la rainure annulaire de la tige cylindrique.

# Fig.1

# Fig.2

## Fig.3

## Fig.5

# Fig.4